# EUROPEAN PATENT APPLICATION

(11) **EP 2 239 233 A1**
(43) Date of publication of application: **13.10.2010**
(21) Application number: 08871053.8
(22) Date of filing: 17.12.2008
(51) Int. Cl.: C02F 1/68

(54) **PROCESS FOR PRODUCING WATER SUPERSATURATED WITH DISSOLVED OXYGEN**

(30) Priority: 15.01.2008 JP 2008005661
(71) Applicant: Fukai, Toshiharu, Ueda-shi Nagano 386-0002 (JP)
(72) Inventor: Fukai, Toshiharu, Ueda-shi Nagano 386-0002 (JP)
(74) Representative: Betten & Resch
(86) International application number: PCT/JP2008/072927
(87) International publication number: WO 2009/090823

(57) **Abstract**

The present invention provides a method for producing supersaturated dissolved oxygen-containing water, capable of increasing dissolved oxygen concentration of water to a value largely exceeding saturated dissolved oxygen concentration.

Water is put in a circulation pathway composed of a tank 10 and a cyclic connecting pipe 12, and a pump 16 and silicon dioxide-rich rock 22 of igneous rock are provided in the midstream of the cyclic connecting pipe 12. The water is circulated without contact with air between the tank 10 and the cyclic connecting pipe 12 and brought into contact with the rock 22 by operating the pump 16. Water high in dissolved oxygen can be produced by cyclically bringing the water moving in the circulation pathway into contact with the silicon dioxide-rich rock 22 of igneous rock without contact with air.

## Description

### [TECHNICAL FILED]

The present invention relates to a method for producing supersaturated dissolved oxygen-containing water, capable of adding dissolved oxygen to water in large quantities.

### [TECHNICAL BACKGROUND]

In drainage treatment or the like, aeration of water is conventionally adapted to boost microorganisms which degrade organic sludge substances. It is conventionally known that dissolved oxygen in water is increased by performing aeration to water. Further, it is also known that water increased in dissolved oxygen is suitable for growth of fishery products living in water, for growth of plants, for drinking and eating use for animals such as humans.

Patent Literature 1 is known as aeration means of water. The basic structure of Patent Literature 1 is shown in Fig. 4. Water is stored in a tank 50, and an aeration tube 52 is horizontally disposed in the vicinity of the bottom within the tank 50. The aeration tube 52 has a number of holes (not shown) opened upwardly. A blower 54 is provided out of the tank 50, and the blower 54 is connected with one end of the aeration tube 52 through a connecting pipe 56. When the blower 54 is operated, air is supplied from the blower 54 to the aeration tube 52 through the connecting pipe 56, and injected to the water in the tank 50 through the holes of the aeration tube 52, whereby the water in the tank 50 is aerated with this air. The water completed in aeration is discharged out through a discharge pipe 60 including a valve 58 provided in the middle thereof.

One end of a water inlet pipe 66 including a valve 64 provided in the middle thereof is connected to a water source 62 for supplying new water to the tank 50. The other end of the water inlet pipe 66 is disposed in a level higher than a liquid level 68 of the tank 50, and opened to the atmosphere. When water is supplied from the water source 62 to the tank 50, the valve 64 is opened to discharge water into the tank 50 through an opening part at the other end of the water inlet pipe 66. The water discharged into the tank 50 through the water inlet pipe 66 is passed through the atmosphere once and then supplied into the tank 50. This is based on the idea of exposing also the water to be introduced into the tank 50 to air as much as possible since the water is aerated with air in the tank 50.

[Patent Literature 1] Japanese Patent Application Laid-Open No. 8-1-17783

### [DISCLOSURE OF THE INVENTION]

### [PROBLEMS TO BE SOLVED BY THE INVENTION]

Although it was known that the aeration of water stored in the tank 50 with air results in increased dissolved oxygen concentration (DO), the degree of increase was unknown. Therefore, an experiment was carried out to numerically examine a relation between aeration time and dissolved oxygen concentration. As the experimental object, city water and various natural waters such as hot spring water or Tensho-sui with dissolved oxygen concentration slightly higher than saturated dissolved oxygen concentration (generally, DO of 8 to 8.45 mg/l although it is varied depending on the temperature) were used. As a result of the experiment, the dissolved oxygen concentration of city water (water with dissolved oxygen concentration sufficiently lower than the saturated dissolved oxygen concentration) is increased to the saturated dissolved oxygen concentration by long-term aeration. On the other hand, although it was estimated that the dissolved oxygen concentration of various natural waters initially having dissolved oxygen concentrations higher than the saturated dissolved oxygen concentration is higher as the aeration time is longer, the result was in fact opposite, and the dissolved oxygen concentration of various natural waters with dissolved oxygen concentration higher than the saturated dissolved concentration was reduced to the saturated dissolved oxygen concentration as the aeration time is extended (after about 10 minutes to 30 minutes). That is, it was found that both the water with dissolved oxygen concentration lower than the saturated dissolved oxygen concentration and the water with dissolved oxygen concentration higher than the saturated dissolved oxygen concentration get closer to the saturated dissolved oxygen concentration as the aeration time is longer.

Water can maintain the saturated dissolved oxygen concentration by continuing the aeration. For example, if an aeration device can be provided to carry fishes alive over a long distance, the dissolved oxygen concentration of water in a water tank containing the fishes can be maintained at a high value. However, since the aeration device cannot be provided on a carrying truck, a plastic bag containing the fishes is practically carried while being filled with oxygen. Since the volume of the oxygen filled in the plastic bag occupies the volume of the loading platform of the truck, this method is inferior in transport efficiency. As the other usage of water high in dissolved oxygen, for example, water for health-enhancing drinks or for plants is conceivable. However, such water is disadvantageous in that the limited dissolved oxygen concentration thereof disables further increase in efficiency. As further another usage of water high in dissolved oxygen, water used for emulsion fuel composed of fuel and water is conceivable. The water used for emulsion fuel is also disadvantageous in that the limited dissolved oxygen concentration thereof disables improvement in combustion efficiency.

An object of the present invention is to solve the above-mentioned problems and to provide a method for producing supersaturated dissolved oxygen-containing water, capable of increasing the dissolved oxygen concentration of water to a value largely exceeding the saturated dissolved oxygen concentration.

### [MEASURES FOR SOLVING THE PROBLEMS]

A method for producing supersaturated dissolved oxygen-containing water according to the present invention comprises storing water in a circulation pathway, the circulation pathway including a silicon dioxide-rich rock of igneous rock provided in the midstream thereof, and cyclically moving the water in the circulation pathway by transfer means to bring the water into contact with the rock while preventing contact of the water with air during the cyclic movement in the circulation pathway. In the present invention, the circulation pathway is composed of a tank containing water and a cyclic connecting pipe having one end connected with the tank, with an opening part at the other end thereof being disposed below a liquid level of the tank, the transfer means is a pump for transferring the water from one end of the cyclic connecting pipe to the other end thereof, which is provided in the midstream of the cyclic connecting pipe, and the silicon dioxide-rich rock of the igneous rock is provided in the midstream of the cyclic connecting pipe. In the present invention, further, the silicon dioxide-rich rock of the igneous rock is composed of obsidian. The size of most pieces of the silicon dioxide-rich rock of the igneous rock is set to 5 to 50 mm.

### [EFFECTS OF THE INVENTION]

Water high in dissolved oxygen (e.g., DO about 11 mg/1) can be produced by cutting the cluster of water by preventing the water from contacting with air (aeration) and bringing the water into contact with the silicon oxide-rich rock of igneous rock during the cyclic movement in the circulation pathway. When the water high in dissolved oxygen is used, for example, as water for emulsion fuel (emulsion fuel such as heavy oil, light oil, kerosene, gasoline, automotive fuel, or ship fuel), the dissolved oxygen contained in the water enhances combustion of the emulsion fuel as oxygen at the time of combustion thereof. Consequently, the emulsion fuel can be easily ignited by various burners, and the combustion calorie of the emulsion fuel becomes higher than the calorie of only general fuel.

Since the water high in dissolved oxygen produced by the present invention also promotes growth of animals and plants, compared with the case of using general water, the fish catches of cultured fishes and the yield amounts of vegetables, fruits, cereals and plants can be increased. Further, use of the water high in dissolved oxygen produced by the present invention as raw material for various drinking waters can help to enhance the health of humans, pets and the like, since the dissolved oxygen boosts microorganisms which degrade harmful substances invading the human body.

### [BRIEF DESCRIPTION OF THE DRAWINGS]

Fig. 1 is a structural view showing one embodiment for carrying out a method for producing supersaturated dissolved oxygen-containing water according to the present invention;
Fig. 2 is a structural view showing another embodiment for carrying out the method for producing supersaturated dissolved oxygen-containing water according to the present invention;
Fig. 3 is a metric certificate showing dissolved oxygen concentration (DO) of water produced by the method for producing supersaturated dissolved oxygen-containing water according to the present invention; and

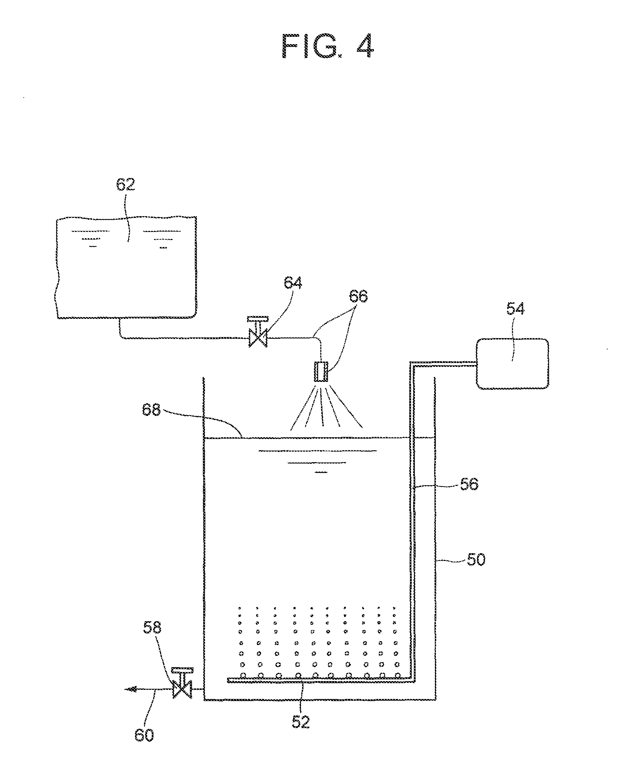

Fig. 4 is a structural view showing conventionally known aeration.

### [DESCRIPTION OF REFERENCE NUMBERS]

10: Tank
12: Cyclic connecting pipe
14: Pump
18: Rock container
22: Rock
24: Opening part
25: Branch pipe
26: Liquid level
34: Cyclic connecting pipe

### [BEST MODE FOR CARRYING OUT THE INVENTION]

In the present invention, dissolved oxygen is added to water in large quantities by cyclically moving water in the circulation pathway so as to bring the water into contact with the rock while preventing contact thereof with air.

### [Example 1]

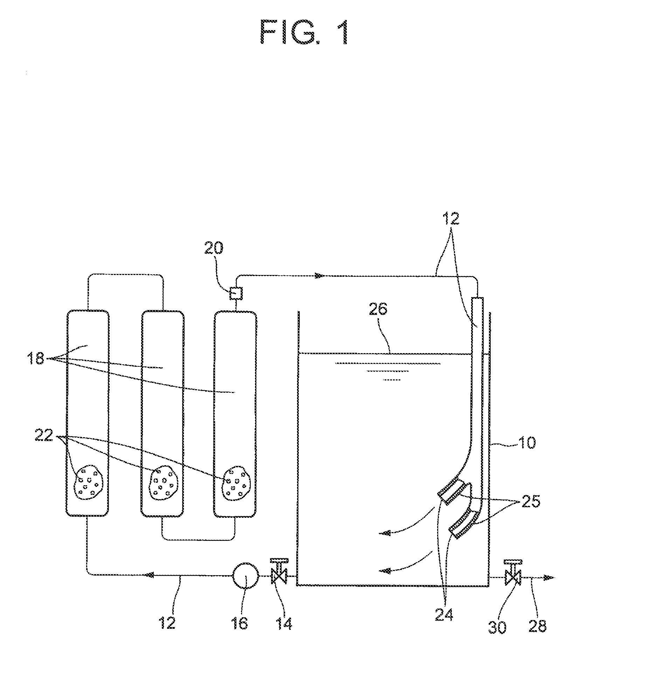

The present invention will be then described in reference to the accompanying drawings. Fig. 1 is a structural view showing one embodiment for carrying out the method for producing supersaturated dissolved oxygen-containing water according to the present invention. In the present invention, a tank 10 is provided, and water for increasing dissolved oxygen is stored in the tank 10. One end of a cyclic connecting pipe 12 for discharging the water in the tank 10 to the outside of the tank 10 once and then returning it to the tank 10 is connected to the lower side of the tank 10. In the structural view of Fig. 1, water is circulated in the circulation pathway composed of the tank 10 and the cyclic connecting pipe 12. The cyclic connecting pipe 12 includes an opening and closing valve 14, a pump 16 as transfer means for transferring the water, a rock container 18 and a filter 20 disposed in order from the upstream side (the tank 10 side) to the downstream side. An opening part 24 at the downstream-side other end of the cyclic connecting pipe 12 is disposed at a level sufficiently lower than a liquid level 26 within the tank 10. The pump 16 is desirably composed of a high-pressure pump capable of outputting high pressure. A commercially available inexpensive high-pressure pump can output high pressure up to about 10 atm.

The downstream-side other end of the cyclic connecting pipe 12 is formed into a plurality of branch pipes 25 vertically disposed below the liquid level 26 in the tank 10. The opening part 24 is formed in each of the plurality of branch pipes 25. The branch pipes 25 are disposed at one side end in the tank 10. Each opening part 24 of each branch pipe 25 is disposed so that water flowing into the tank 10 at that position agitates the water in the tank 10.

The rock container 18 stores a silicon dioxide-rich rock 22 of igneous rock (rock containing about 65 to 76% of silicon dioxide). The rock 22 desirably has, for example, a size of about 5 to 50 mm, and is stored in the rock container 18 while being put in a net (not shown). By setting the size of most pieces of the silicon dioxide-rich rock 22 of igneous rock to about 5 to 50 mm, a number of sharp angular parts can be formed on the surface of the rock 22 to bring the water into contact with the surface of the rock 22 in large quantities.

Examples of the silicon dioxide-rich rock 22 of igneous rock (classified to volcanic rock and plutonic rock) include rhyolite such as obsidian, perlite or pitchstone as the volcanic rock and granite as the plutonic rock. Of the igneous rocks, obsidian is desirably used from the point of inexpensiveness and availability. In order to add the dissolved oxygen to water in large quantities, long-time contact of the water with the rock 22 is desirable. Although this requires an extended length of the rock container 18, it is more desirable to divide the rock container 18 to some short cylinders (e.g., cylinders about 80 cm in length) from the point of reduction in device size or workability in replacement of the rock 22.

A discharge pipe 28 for discharging the dissolved oxygen-containing water laid into a supersaturated state out of the tank 10 is connected to the lower side of the tank 10, and an opening and closing valve 30 is provided in the middle of the discharge pipe 28.

The method for producing supersaturated dissolved oxygen-containing water according to the present invention is then described. Water is put in the tank 10 so that the liquid level 26 is located sufficiently higher in level than the position of the opening part 24 of the cyclic connecting pipe 12. As the water to be put in the tank 10, water which preliminarily contains dissolved oxygen in large quantities is desirably used. Thereafter, the opening and closing valve 14 is opened, and the pump 16 is operated. The water in the tank 10 is introduced into the cyclic connecting pipe 12 and delivered to the pump 16 by sucking operation of the pump 16, increased in pressure by the pump 16, and discharged toward the rock container 18. In the rock container 18, the high-pressure water contacts with the silicon dioxide-rich rock 22 having a number of sharp angular parts on the surface. By bringing the water into contact with the rock 22 for a long time, the cluster of water can be finely cut. The cluster of water can be finely cut by setting the size of the silicon dioxide-rich rock 22 to 5 to 50 mm.

Water is a substance composed of a bonding electron pair of oxygen atom and hydrogen atom and having many intermolecular spaces. The intermolecular space can be extended more as the cluster of water is cut more finely. Accordingly, the dissolved oxygen can be added in large quantities to the space extended by finely cutting the cluster. Consequently, a large quantity of dissolved oxygen can be added to the water produced by the method for producing water of the present invention. Further, a space for fitting other substances can be also extended by finely cutting the cluster of water, and plant oil (castor oil) or oil which functions as an emulsifier can be put into the space.

The water passed through the rock container 18 is introduced to a position lower in level than the liquid level 26 within the tank 10 through the opening part 24 of the cyclic connecting pipe 12, and mixed to the water in the tank 10. The water in the tank 10 repeats the cycle of going through the cyclic connecting pipe 12 (provided with the pump 16 and the rock container 18 in the middle) and returning back to the tank 10 by continuously operating the pump 16. The water passed through the rock container 18 contains dissolved oxygen in large quantities as described above, and this water high in dissolved oxygen is mixed with the water in the tank 10. That is, the dissolved oxygen concentration of the water contained in the tank 10 is successively increased by repeating the water circulation. Since the water flowing into the tank 10 through the opening parts 24 of the branch pipes 25 agitates the water in the tank 10, no agitator is needed. The opening parts 24 of the branch pipes 25 are disposed so that the water flowing into the tank 10 through the opening parts 24 of the branch pipes 25 is rotated clockwise in the northern hemisphere.

A hermetically-sealed state to the atmosphere is ensured in the upstream-side connecting position of the cyclic connecting pipe 12 connecting with the tank 10. The midstream of the cyclic connecting pipe 12 is maintained also in the hermetically-sealed state to the atmosphere. Further, the position of the opening parts 24 on the downstream side of the cyclic connecting pipe 12 is maintained also in the hermetically-sealed state since the opening parts 24 are disposed below the liquid level 26. Therefore, in the water circulation pathway shown in Fig. 1, water is circulated in the hermetically-sealed state without mixing of air thereto during the circulation. That is, the water is never aerated during the circulation. In Fig. 1, although the upper part of the liquid level 26 in the tank 10 is exposed to air, it never causes the aeration of water by mixing of air to the water during the circulation.

As described above, dissolved oxygen could be added to water in large quantities by cyclically bringing water into contact with the silicon dioxide-rich rock 22 while preventing mixing of air to the water (aeration of water) in the midstream of the water circulation pathway. The more the water in the tank 10 is circulated in the cyclic connecting pipe 12, the more the dissolved oxygen can be added to the water. For example, a dissolved oxygen concentration (DO) of about 11 mg/l can be attained by 5- to 10-time circulation of the water in the cyclic connecting pipe 12.

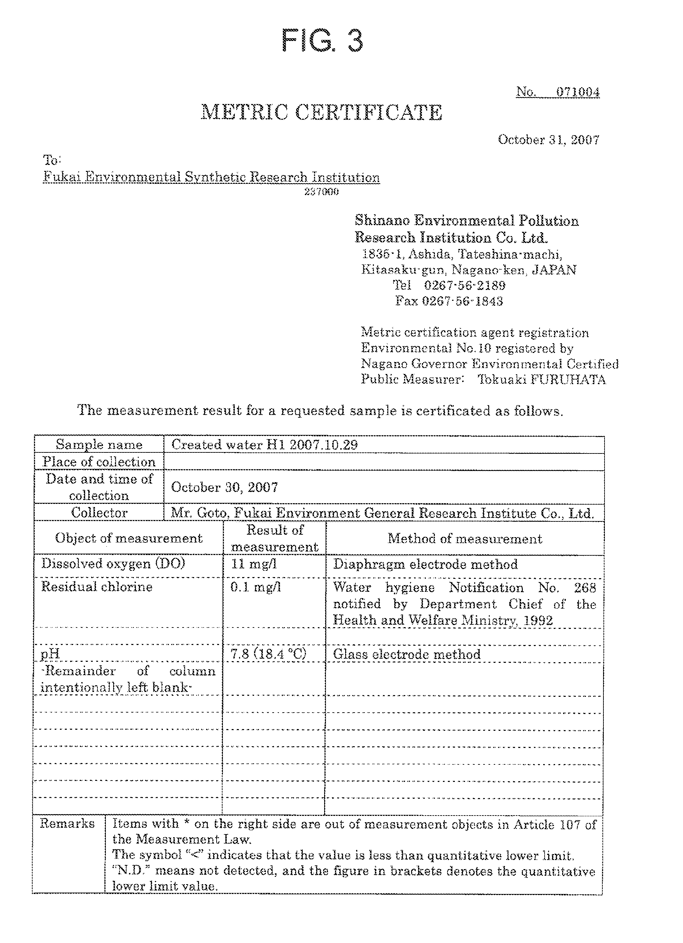

It is described by a metric certificate of Fig. 3 that the dissolved oxygen concentration (DO) of water produced by the method for producing supersaturated dissolved oxygen-containing water of the present invention is about 11 mg/l. The metric certificate is prepared by Shinano Environmental Pollution Research Institute Co. Ltd., 1835-1, Ashida, Tateshina-machi, Saku-gun, Nagano, Japan (Tel. 0267-56-2189). In the metric certificate of Fig. 3, "Created water H1 2007.10.29" in the column of Material Name shows "water produced by the method for producing supersaturated dissolved oxygen-containing water of the present invention". For "Dissolved oxygen (DO)" in the first line of "Measurement Object" in the metric certificate, "Measurement Result" corresponding thereto is "11 mg/l". That is, it is certificated by a third party's measurement that the water produced by the present invention can have a dissolved oxygen concentration (DO) which corresponds to a supersaturated dissolved oxygen concentration (11 mg/1) far more than saturated dissolved oxygen concentration.

The dissolved oxygen concentration (DO) contained in the water produced by the present invention is a value (DO 11 mg/1) largely exceeding the saturated dissolved oxygen concentration (DO 8 to 8.45 mg/1). For example, this water can be used as water for making an emulsion fuel (emulsion fuel such as heavy oil, light oil, kerosene, gasoline, automotive fuel, or ship fuel) by mixing with a fuel. Conventional emulsion fuel was disadvantageous in that since general water such as city water was used, the resulting emulsion fuel could not be easily ignited by a commercially available burner at the time of combustion, and requires much time to burn due to the reduced combustion calorie of the fuel. On the other hand, in the emulsion fuel using the supersaturated dissolved oxygen-containing water produced by the present invention, since dissolved oxygen can be added to the water in large quantities, combustion of the fuel can be enhanced by the effect of a large quantity of dissolved oxygen to generate enormous energy (calorie). Consequently, the fuel can be easily ignited by various burners, and the combustion calorie thereof also becomes larger than that of only general fuel.

For example, an emulsion fuel using the water produced by the present invention (composed of 70% heavy oil A and 30% water) could have a calorie about 1 to 2.3 times higher than a fuel composed of 100% heavy oil A which has about 9400 kcal/l. An emulsion fuel using the water produced by the present invention (composed of 70% light oil and 30% water) could have a calorie about 1 to 1.8 times higher than a fuel composed of 100% light oil which has about 9100 kcal/l. This is attributable to that since a large quantity of dissolved oxygen can be added to water, a large quantity of oxygen can be supplied from the water at the time of combustion, whereby a calorie equal to or higher than the calorie of 100% fuel can be obtained. Since the emulsion fuel using the water produced by the present invention can be easily ignited by use of a commercially available burner, the emulsion fuel of the present invention can be perfectly burnt, and the amount of emission of CO₂ or NOx can be thus reduced, compared with conventionally known fuels.

Further, by circulating water through the silicon dioxide-rich rock 22 of igneous rock, active hydrogen is added to the water, and further carbon or sulfur contained in the igneous rock is added to the water although it is a trace. Such hydrogen, carbon or sulfur is contained also in the water produced by the present invention. Therefore, when this water is used for emulsion fuel, the ignition of the fuel can be smoothened by the hydrogen, carbon or sulfur, and the combustion efficiency can be also improved.

Since the water produced by the present invention contains a large quantity of dissolved oxygen, this water can be used in various fields in addition to promotion of growth of animals and plants. For example, a large quantity of fishes can be transported, compared with conventional transportation of live fishes in a polyester bag, since it is not needed to expand the polyester bag with oxygen. When cultured fishes are grown in a preserve or the like, the fishes can be grown to the same size as conventional cultured fishes in a time shorter than in the past since the water high in dissolved oxygen enhances the growth of fishes. In other words, fishes larger in size than the conventional fishes can be obtained in the same culturing period by using the water high in dissolved oxygen, and the fish catches can be increased.

Further, by using the water high in dissolved oxygen for growth of vegetables, fruits, cereals, plants or the like, the vegetables, fruits, cereals, plants or the like can be grown at a speed close to 1.5 to 2 times those grown using conventional water. That is, the yield amount of the vegetables, fruits, cereals, plants or the like can be increased by using the water high in dissolved oxygen.

Further, use of the water high in dissolved oxygen produced by the present invention as raw material for various drinking waters can help to enhance the health of humans and pets, since the dissolved oxygen boosts microorganisms which degrade harmful substances invading the body.

The water in the present invention includes a water-based liquid which is subjected to any treatment.

### [Example 2]

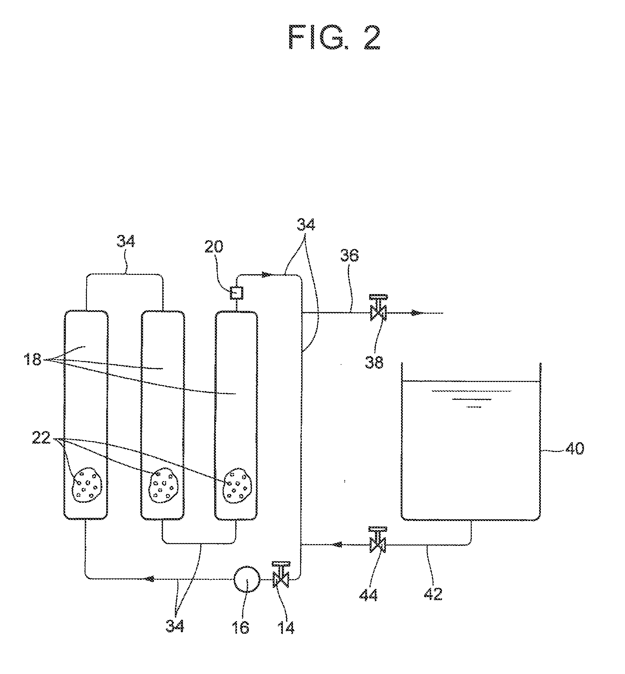

Another example for carrying out the method for producing supersaturated dissolved oxygen-containing water according to the present invention will be described in reference to Fig. 2. The structure of Fig. 2 does not use the tank 10, while the structure of Fig. 1 is adapted to collect water once in the tank 10. In Fig. 2, the same reference numbers as in Fig, 1 show the same structural elements. The circulation pathway of water is composed of only a continuous cyclic connecting pipe 34. An opening and closing valve 14, a pump 16 as transfer means for transferring water, a rock container 18 and a filter 20 are provided in the midstream of the cyclic connecting pipe 34 in order from the upstream side to the downstream side in a water flowing direction.

A discharge pipe 36 for discharging water circulating in the cyclic connecting pipe 34 out of the tank 10 is connected to the middle of the cyclic connecting pipe 34 after passing through the rock container 18, and a valve 38 is provided in the middle of the discharge pipe 36. A water supply tank 40 is provided in the vicinity of the cyclic connecting pipe 34, with a water supply pipe 42 being connected to the middle between the water supply tank 40 and the cyclic connecting pipe 34, and a valve 44 is provided in the midstream of the water supply pipe 42. The connecting position of the water supply pipe 42 to the cyclic connecting pipe 34 is desirably set to an intermediate position between the connecting position of the discharge pipe 36 and the position of the pump 16.

In Fig. 2, the water circulating in the cyclic connecting pipe 34 that is the circulation pathway has no chance to expose to air. That is, the water circulating in the cyclic connecting pipe 34 is never aerated. Therefore, the more the water is circulated in the cyclic connecting pipe 12, the more the dissolved oxygen can be added to the water in the tank 10. For example, a dissolved oxygen concentration (DO) of about 11 mg/l can be attained by 5- to 10-time circulation of the water in the cyclic connecting pipe 12. The water produced by the method for producing supersaturated dissolved oxygen-containing water of Example 2 (Fig. 2) has the same effect as the water in Example 1.

The water high in dissolved oxygen can be taken out of the cyclic connecting pipe 34 through the discharge pipe 36 by opening the valve 38. At that time, the valve 44 is opened also to supply new water from the water supply tank 40 to the cyclic connecting pipe 34 through the water supply pipe 42.

## Claims

1. A method for producing supersaturated dissolved oxygen-containing water, comprising: storing water in a circulation pathway, the circulation pathway including a silicon dioxide-rich rock of igneous rock provided in the midstream thereof; and cyclically moving the water in the circulation pathway by transfer means to bring the water into contact with the rock, while preventing contact of the water with air during the cyclic movement in the circulation pathway.

2. The method for producing supersaturated dissolved oxygen-containing water according to claim 1, **characterized in that** the circulation pathway is composed of a tank which stores water and a cyclic connecting pipe having one end connected with the tank, with an opening part at the other end thereof being disposed below a liquid level of the tank, the transfer means is a pump for transferring the water from the one end of the cyclic connecting pipe toward the other end thereof, which is provided as the transfer means in the midstream of the cyclic connecting pipe, and the silicon dioxide-rich rock of the igneous rock is provided in the midstream of the cyclic connecting pipe.

3. The method for producing supersaturated dissolved oxygen-containing water according to claim 2, **characterized in that** the other end disposed below the liquid level of the tank of the cyclic connecting pipe is composed of vertically divided branch pipes, and the opening part is provided on each branch pipe so as to agitate the water in the tank with water flowing into the tank through the opening part.

4. The method for producing supersaturated dissolved oxygen-containing water according to any one of claims 1 to 3, **characterized in that** the silicon dioxide-rich rock of the igneous rock is obsidian.

5. The method for producing supersaturated dissolved oxygen-containing water according to claim 4, **characterized in that** the size of most pieces of the silicon dioxide-rich rock of the igneous rock is set to 5 to 50 mm.
